# NEUE EUROPÄISCHE PATENTSCHRIFT

(11) **EP 1 286 865 B2**
(45) Veröffentlichungstag und Bekanntmachung des Hinweises auf die Entscheidung über den Einspruch: **05.03.2008**
(45) Hinweis auf die Patenterteilung: 15.09.2004
(21) Anmeldenummer: 01944925.5
(22) Anmeldetag: 14.05.2001
(51) Int. Cl.: B60R 21/01

(54) **VORRICHTUNG ZUM ANSTEUERN EINES AKTIVEN ELEMENTS EINES INSASSENRÜCKHALTESYSTEMS EINES FAHRZEUGS**
DEVICE FOR THE CONTROL OF AN ACTIVE ELEMENT OF AN OCCUPANT RETENTION SYSTEM IN A VEHICLE
DISPOSITIF PERMETTANT DE COMMANDER UN ELEMENT ACTIF APPARTENANT A UN SYSTEME DE RETENUE DES OCCUPANTS D'UN VEHICULE

(30) Priorität: 05.06.2000 DE 10027825
(43) Veröffentlichungstag der Anmeldung: 05.03.2003
(73) Patentinhaber: Siemens VDO Automotive AG, 93055 Regensburg (DE)
(72) Erfinder: BAUMGARTNER, Walter, 93086 Wörth/Donau (DE); BRAUNER, Norbert, 94377 Steinach (DE); FÖLL, Albrecht, 93057 Regensburg (DE)
(86) Internationale Anmeldenummer: PCT/DE2001/001827
(87) Internationale Veröffentlichungsnummer: WO 2001/094158

(56) Entgegenhaltungen:
- EP-A- 0 292 669
- WO-A-00/32445
- WO-A-97/22009
- WO-A-97/32757
- DE-A- 19 651 452
- DE-A- 19 843 074
- US-A- 5 112 080
- US-A- 5 176 214
- US-A- 5 182 459
- KOSIAK W K ET AL: "FUTURE TRENDS IN RESTRAINT SYSTEMS ELECTRONICS" AUTOMOTIVE ENGINEERING INTERNATIONAL, SAE INTERNATIONAL, US, Bd. 107, Nr. 9, September 1999 (1999-09), Seiten 1-6, XP000860904 ISSN: 0098-2571

## Beschreibung

Die Erfindung betrifft eine Vorrichtung zum Ansteuern eines aktiven Elements eines Insassenrückhaltesystems eines Fahrzeugs.

Der nächstkommende Stand der Technik, US 5,182,459 offenbart ein Steuersystem fur eine Fahrzeug Sicherheitsvorrichtung. Es umfasst zwei Beschleunigungssensor Schaltkreise, ein analoges Kollisionserkennungssystem ein digitales Kollisionserkennungssystem und einen Schwellspannungsgenerierkreis. Ein Zündpfad umfasst ein Energiereservoir und erste bis dritte Transistoren und eine Zundpille.

Das digitale Kollisionserkennungssystem umfasst einen Mikrocomputer der dazu ausgebildet ist den Unterschied zwischen jedem der Ausgangs-Signale der Beschleunigungssensor Schaltkreise und einer Referenzspannung zu integrieren und zu vergleichen mit einem Schwellenwert. Wenn beide Integralwerte den Schwellenwert überschreiten, wird ein Niedrig-Pegel-Signal an den Eingang des dritten Transistors ausgegeben und es werden Auch-Pegel-Signale zum Ansteuern der ersten und zweiten Transistoren ausgegeben. Wenn der Integralwert nicht in einem zulässigen Bereich ist, verhindert der Mikrocontroller die Ausgabe des Kollisionserkennungssignals an den dritten Transistor.

Insassenrückhaltesysteme der bisherigen Art weisen einen mechanischen Safing-Sensor auf, der in dem zentralen Steuergerät des Insassenrückhaltesystems eingebaut ist. Die bisherigen, meist in der Steuereinheit (ECU) des Rückhaltesystems angeordneten mechanischen Safing-Sensoren sind schwierig testbar, langsam und relativ teuer.

Ein Safing-Konzept mit einer Safing-Funktion im Rückhaltesystem bedeutet, dass ein ungewolltes Auslösen des Insassenrückhaltesystems bei einer Fehlfunktion der Aufprall-Erkennungseinheit, die die Sensoren und das Steuergerät des Insassenrückhaltesystems aufweist, verhindert wird. Dies ist bisher nur für die Erkennung eines Frontalaufpralls oder eines Seitenaufpralls mit anschließendem Aktivieren der Front-Airbags bzw. der Seitenairbags realisiert worden. Für die Erkennung eines Roll-Overs mit anschließendem Auslösen von Seiten-Airbags, Vorhänge, etc. gibt es bisher kein zuverlässiges Safing-Konzept.

Aufgabe der Erfindung ist es, ein Insassenrückhaltesystem mit einem kostengünstigen und der sicheren Safing-Konzept zu verwirklichen.

Die Aufgabe der Erfindung wird gelöst durch die Merkmale des unabhängigen Patentanspruchs 1.

Vorteil der Erfindung ist es, einen Safing-Sensor einsparen zu können. Dazu wird die Detektierung eines Frontal-Aufpralls mit Hilfe eines Safing-Sensors in den Early-Crash-Satellite bzw. -Sensor verlagert, der vorzugsweise in dem vorderen Teil des Fahrzeugs, z.B. in dessen Stoßstange und/oder im vorderen Motorraum, integriert ist.

Für die Safing-Funktion bei der Erkennung von einem SeitenAufprall wird der Beschleunigungssensor in Y-Richtung, d.h. in Richtung der Radachsen quer zur Fahrzeugrichtung, gleichzeitig als Safing-Sensor benutzt.

Für die Safing-Funktion bei der Erkennung eines Roll-Over-Zustandes wird zumindest einer der Beschleunigungssensoren, die in y-Richtung und in z-Richtung wirken, gleichzeitig als Safing-Sensor benutzt.

In einer weiteren Ausführungsform sind mehrere beteiligte Sensoren vorhanden, die gleichzeitig die Funktion von Safing-Sensoren erfüllen.

Zur Auswertung der Sensorsignale wird eine Steuereinheit (ECU) mit nachfolgenden, mehrstufigen Sicherheits-Schaltern, beispielsweise aus einer Vorstufe mit zwei Transistoren und einem nachgeschaltetem Sicherheitstransistor bestehend, zur Realisierung eines Safing-Konzepts eingesetzt.

In dem Zündpfad, in dem das Zündelement, der Energiespeicher und die Zündschalter enthalten sind, wird zusätzlich ein Sicherheits-Schalter vorgesehen. Eine Zündung des Zündelements kann nur dann geschehen, wenn sowohl der/die Zündschalter als auch der Sicherheits-Schalter gleichzeitig durchschalten. Der Sicherheitstransistor im Zündpfad wird von einer Vorstufe angesteuert, die den Sicherheits-Schalter nur dann freischaltet, wenn eine ausreichend hohe Beschleunigung vorliegt.

Die Vorstufe besteht aus zwei Schaltern, die jeweils Steuersignale des Steuergeräts erhalten und nur dann durchschalten, wenn ein Aufprall erkannt wird. Die Vorstufenschalter sind so miteinander verschaltet, dass beide Eingangssignale der Vorstufenschalter auf Auslösung erkennen. Bei einer Fehlfunktion der Aufprall-Erkennungseinheit ist einer der beiden Eingangssignale der Vorstufenschalter nicht aktiviert, so dass der Sicherheits-Schalter nicht durchgeschaltet wird und eine Zündung des Zündelements nicht stattfinden kann. Somit wird ein versehentliches Zünden verhindert.

Es kann durch den Einsatz der Vorstufenschalter der Early-Crash-Satellite oder Roll-Over-Sensor, gleichzeitig die Safing-Funktion übernehmen.

Die Vorstufenschalter sind vorzugsweise diskret ausgebildet, können aber auch integriert ausgeführt sein. Der Sicherheitsschalter ist in der Regel diskret ausgeführt.

Bei einem Kurzschluss zwischen den beiden Eingängen der Vorstufenschalter ergibt sich ein Potential an den Eingängen, das in der Nähe der Versorgungsspannung bzw. der Masse liegt und somit mindestens einen der beiden Vorstufenschalter sperrt. Dadurch wird gewährleistet, dass bei einem Kurzschluss zwischen den Eingängen der Vorstufenschalter der Sicherheits-Schalter sperrt. Ebenso führt eine Störeinwirkung auf beide Eingänge der Schalter nicht zu einem Durchschalten des Sicherheitstransistors.

Die Auswertung der Sensorsignale und die Ansteuerung des Zündpfads bzw. der Zündpfade und der Vorstufenschalter wird durch ein Steuergerät durchgeführt. Die Sensorsignale werden im Steuergerät von einer Auswerteeinheit ausgewertet, die den Algorithmus zur Zündentscheidung trifft. Weiterhin wird ein Sensorsignal einer Halteschaltung zugeführt, die abhängig von der Funktion Frontal-Aufprallerkennung, Seiten-Aufprallerkennung oder Roll-Over-Erkennung unterschiedliche Haltezeiten hat. Trifft die Auswerteeinheit die Entscheidung, das Zündelement zu zünden, werden die Zündtransistoren mit Hilfe einer Feuerroutine durchgeschaltet. Weiterhin wird die Zündentscheidung logisch verknüpft mit dem Ausgang des Halteglieds und den Vorstufenschaltern zugeführt. Nur wenn die Aufprall-Erkennung-Einheit, die beispielsweise die Sensoren und die Airbag-Steuereinheit enthält, sowie die Safing-Funktion einen Aufprall erkennen, kann die Zündpille gezündet werden.

Vorteilhafte Ausführungsformen und Weiterbildungen der Erfindung sind in den abhängigen Ansprüchen aufgeführt.

Die Erfindung wird anhand der Zeichnung mit den Figuren 1,2 und 3 erläutert.

Es zeigen:
- Figur 1: eine Ansteuerschaltung mit einem ersten Safing-Konzept,
- Figur 2: eine Ansteuerschaltung mit einem zweiten Safing-Konzept, nicht zur Erfindung gehörend dient aber zur Erläuterung einer weiteren Ausführungsform der in Fig.1 gereigten Schaltung
- Figur 3: eine weitere Ansteuerschaltung

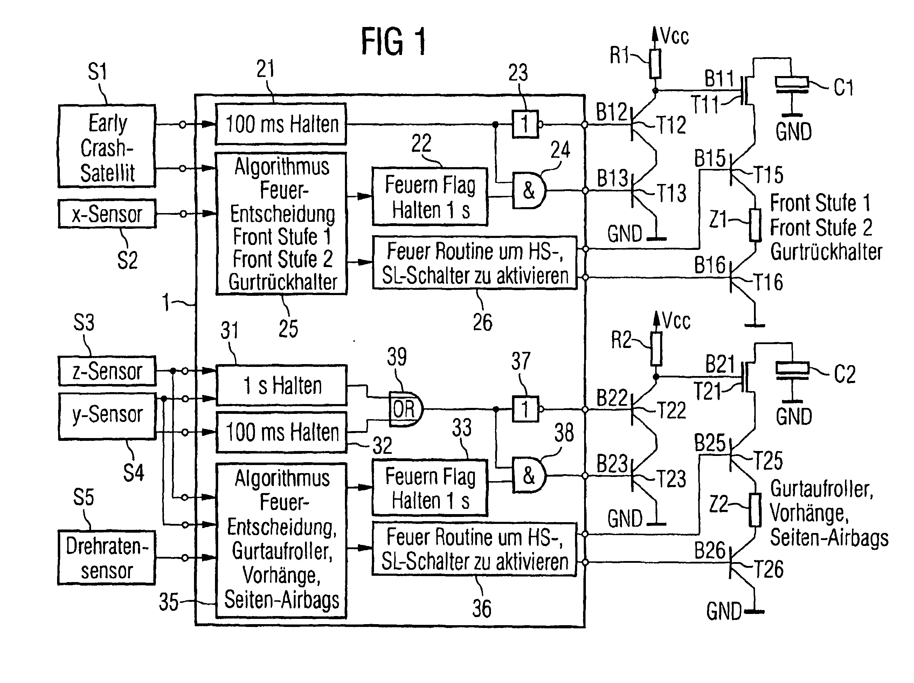

Elemente mit gleicher Funktion und gleichem Aufbau werden mit den gleichen Bezugszeichen in den Figuren 1, 2 und 3 bezeichnet.

Figur 1 zeigt eine Ansteueranordnung für ein aktives Element, beispielsweise als Zündelemente Z1, Z2 ausgebildet, bei der ein Steuergerät 1 abhängig von Sensorsignalen Zündpfade mit einem aktiven Element steuert. Weiterhin steuert Steuereinheit 1 Vorstufen R1, T12, T13 und R2, T22, T23, wodurch sichergestellt wird, dass das aktive Element Z1, Z2 nur dann aktiviert bzw. gezündet werden kann, wenn sowohl die Aufprall-Erkennungs-Einheit als auch die Safing-Funktion eine ausreichend hohe Beschleunigung erkannt hat.

Figur 1 zeigt mehrere Sensoren S1 bis S5, deren Sensorsignale dem Steuergerät 1 zugeführt werden. Der Sensor S1 ist als Early-Crash-Satellite ausgebildet und im vorderen Bereich des Fahrzeugs, vorzugsweise im Bereich der Stoßstange, angeordnet. Dadurch wird ein Frontal-Aufprall besonders früh detektiert. Der Early-Crash-Satellite weist einen Beschleunigungssensor auf, der vorzugsweise in Fahrtrichtung,d.h. in X-Richtung, Bewegungen detektiert.

Der Sensor S2 ist ein Beschleunigungssensor, der Bewegungen in X-Richtung, d.h. Bewegungen in Fahrzeugrichtung, aufnimmt.

Der Sensor S3 ist ein Beschleunigungssensor, der Bewegungen bzw. Beschleunigungen in Z-Richtung aufnimmt, d.h. Bewegungen des Fahrzeugs in vertikale Richtung. Dadurch werden insbesondere Roll-Over-Situationen in Verbindung mit dem Drehratensensor S5 erkannt.

Der Sensor S4 ist ein Beschleunigungssensor, der Bewegungen des Fahrzeugs in Y-Richtung erkennt, d.h. Bewegungen quer zur Fahrtrichtung des Fahrzeugs. Dadurch werden insbesondere Seitenaufprall-Situationen erkannt.

Der Sensor S5 ist als Drehratensensor ausgebildet, der eine Winkelgeschwindigkeit und daraus abgeleitet eine Winkelbeschleunigung um die Längsachse des Fahrzeugs, d.h. in X-Richtung erkennt. Dadurch werden, insbesondere in Zusammenwirkung mit dem Sensor S3 für die Z-Richtung, Roll-Over-Zustände erkannt.

In dem Steuergerät 1 sind eine erste und eine zweite Auswerteeinheit 25, 35 enthalten, die die Sensorsignale auswerten und nach vorgegebenen Algorithmen eine Zündentscheidung für die verschiedenen Zündpfade VCC, C1, T11, T15, Z1, T16 und VCC, C2, T21, T25, Z2, T26 treffen. Die in den verschiedenen Zündpfaden enthaltenen aktiven Elemente Z1, Z2 stehen beispielhaft für Zündelemente (Zündpille, smart squib) von Front-Airbags, für Zündelemente von Gurtstraffern, für Zündelemente von Seiten-Airbags, von Airbag-Vorhängen und weiteren denkbaren Retraktoren weiterer Rückhaltemittel.

Die erste Auswerteeinheit 25 erhält die Sensorsignale des Early-Crash-Satelliten S1 und des Beschleunigungssensors S2 in X-Richtung. Abhängig von dem zeitlichen Verlauf der Sensorsignale wird anhand eines Algorithmusses eine Feuer-Entscheidung getroffen. Diese Feuer-Entscheidung wird an ein Halteglied 22 und eine erste Aktiviereinheit 26 weitergegeben, die beide im Steuergerät 1 angeordnet sind.

Die erste Aktiviereinheit 26 setzt die Feuer-Entscheidung um und aktiviert die beiden ihr nachgeschalteten Zündschalter T15, T16, die Teil des ersten Zündpfades sind.

Die im Folgenden genannten Schalter
- Vorstufenschalter,
- Sicherheits-Schalter,
- Zündschalter,
können beliebige, steuerbare Schalter sein. Vorzugsweise sind sie als bipolare Transistoren, Feldeffekt-Transistoren, MOS-FET-Transistoren oder ähnlich ausgebildet.

Das Steuergerät 1 enthält weiterhin eine Halte-Einheit, die vorzugsweise eine Änderung des Signals des Early-Crash-Satelliten S1 für eine vorgegebene Zeitdauer hält. Vorzugsweise beträgt diese Zeitdauer etwa 100 ms. Die Halte-Einheit hat das Bezugszeichen 21. Der Ausgang der Halte-Einheit 21 ist über einen Inverter 23 mit dem Eingang B12 des Vorstufenschalters T12 einer Vorstufe R1, T12, T13 verbunden. Weiterhin ist der Ausgang der ersten Halte-Einheit 21 mit dem Eingang eines UND-Glieds 24 verbunden, dessen zweiter Eingang mit dem zweiten Halte-Glied 22 verbunden ist. Der Ausgang des UND-Gliedes ist mit dem Eingang B13 des Vorstufenschalters T13 der Vorstufe R1, T12, T13 verbunden.

Die in der Steuereinheit 1 angeordneten Untereinheiten, z.B. die Auswerteeinheiten 25, 35, die Halteeinheiten 21, 22, 31, 32,33 usw. bezeichnen funktionelle Untereinheiten, die in der Steuereinheit 1 in Hardware abgebildet und/oder durch Software-Vorgänge realisiert werden können.

Die Vorstufe R1, T12, T13 weist zwei Vorstufenschalter T12, T13 auf, deren Durchschaltzweige in Serie geschaltet sind. Das eine Ende des Durchschaltzweigs des zweiten Vorstufenschalters T13 ist mit der Masse verbunden und dessen anderes Ende mit dem einen Durchschaltzweig des Vorstufentransistor T12. Das andere Ende des Durchschaltzweigs des Vorstufentransistors T12 ist über einen Widerstand R1 der Versorgungsspannung VCC verbunden. Der Knotenpunkt zwischen dem Widerstand R1 und dem ersten Vorstufenschalter T12 ist mit dem Eingang B11 des ersten Sicherheits-Transistors T11 verbunden, der Teil des ersten Zündpfades C1, T11, T15, Z1, T16 ist. Der erste Zündpfad ist als Serienschaltung ausgebildet des ersten Energiespeichers, des Durchschaltzweiges des ersten Sicherheits-Schalters T11, dem Durchschaltzweig des ersten Zündschalters T15, dem aktiven Element Z1 und dem Durchschaltzweig des zweiten Zündschalters T16. Der erste Energiespeicher C1 weist eine vorgegebene Energie auf, die ausreicht, um das aktive Element, vorzugsweise ein Zündelement eines Rückhaltemittels, zu zünden. Dabei können Mehrfach-Zündungen eines aktiven Elements oder mehrere aktive Elemente Z1 abhängig von der Feuer-Routine der ersten Aktivier-Einheit 26 ausgelöst werden. Die zum Aufladen des ersten Energiespeichers C1 nötige Schaltung ist zur Vereinfachung der Darstellung nicht eingezeichnet.

Die Zündschalter T15, T16 und der Sicherheits-Schalter T11 sind vorzugsweise auf einem ASIC-Baustein angeordnet. Die Vorstufentransistoren T12 und T13 sind vorzugsweise diskret ausgebildet, um die Eigensicherheit des Systems zu erhöhen.

Durch die Reihenschaltung der beiden Zündschalter T15, T16 und den ersten Sicherheits-Schalter T11 ist gewährleistet, dass das aktive Element Z1 nur dann durchschaltet, wenn alle drei Schalter T11, T15, T16 durchgeschaltet sind (Ver-Undung).

Die Eigensicherheit des Systems wird zusätzlich dadurch erhöht, dass der Sicherheits-Schalter T11 von der Vorstufe R1, T12, T13 angesteuert wird. Ist beispielshaft der erste Sicherheitstransistor T11 ein p-Kanal-MOS-FET-Transistor, so schaltet er nur durch, wenn beide Vorstufenschalter T12 und T13 leitend sind. Ist nur einer der Vorstufentransistoren T12, T13 nicht durchgeschaltet, so wird das Potential des Eingangs B11 des ersten Sicherheitstransistors T11 über den Widerstand R1 das Potential der Versorgungsspannung VCC annehmen, wodurch der erste Sicherheitstransistor sperrt.

Dadurch ist eine zusätzliche Redundanz im System zur Erhöhung der Sicherheit bezüglich des versehentlichen Zündens geschaffen.

Der erste und der zweite Vorstufentransistor T12, T13 sind beispielsweise als pnp- bzw. npn-Transistor ausgebildet.

Tritt beispielsweise zwischen den Eingängen und B12 und B13 der Vorstufenschalter T12, T13 ein Kurzschluss auf, so sind die Ausgänge der Steuereinheit 1 so ausgelegt, dass das Potential entweder in der Nähe der Masse GND oder der Versorgungsspannung VCC liegt, so dass mindestens einer der beiden Vorstufenschalter T12, T13 sperrt und somit der erste Sicherheits-Schalter T11 gesperrt ist.

Funktionieren beide Beschleunigungssensoren S1, S2, so sind im Nichtauslösefall alle Schalter T12, T13, T11, T15 und T16 gesperrt, so dass das aktive Element Z1 nicht ausgelöst wird.

Findet bei funktionierenden Sensoren S1, S2 ein Front-Aufprall statt, so meldet der Early-Crash-Satellit S1 der Steuereinheit 1 etwas früher als der Beschleunigungssensor in X-Richtung S2, den Aufprall, da der Early-Crash-Satellite S1 im vorderem Teil des Fahrzeugs bzw. zur Heckaufprallerkennung im hinteren Teil des Fahrzeugs untergebracht ist. Der zeitliche Versatz der Sensorsignale beträgt beispielhaft 50 ms. Die erste Auswerteeinheit 25 erkennt auf Aufprall und aktiviert das Feuer-Flag in der zweiten Halte-Einheit 22 und aktiviert die Zünd-Routine in der ersten Aktiviereinheit, wodurch die beiden Zündschalter T15 und T16 durchgeschaltet werden. Der Early-Crash-Satellite S1 dient gleichzeitig als Safing-Sensor, der am Eingang der für die Safing-Funktion zuständigen Aufprall-Erkennungs-Einheit liegt.

Bei einem fehlerhaften Sensor, einer fehlerhaften AuswerteEinheit 25, einer fehlerhaften Aktiviereinheit 26 oder einem fehlerhaften Zündschalter T1, T15 wird verhindert, dass das aktive Element Z1 auslöst.

Bei einem Front-Aufprall bei funktionierendem Early-Crash-Satelliten S1 wird das Sensorsignal an eine Halte-Einheit 21 geleitet, das für eine vorgegebene Dauer an ihrem Ausgang ein Aktivierungssignal gibt. Für die vorgegebene Zeitdauer (100 ms) wird der Vorstufentransistor T12 über den Inverter 23 angesteuert und durchgeschaltet. Der zweite Vorstufenschalter T13 wird ebenfalls durchgeschaltet, wenn die Aktivierungssignale der ersten Halte-Einheit 21 und der zweiten Halte-Einheit 22 über das UND-Gatter 24 ein Enable-Signal ergeben, das im vorliegenden Fall HIGH-Level ist.

Die beiden Halte-Einheiten 21, 22 sind vorzugsweise flankengesteuert, d.h. nur bei einer vorgegeben und definierten Änderung der jeweiligen Eingangssignale wird eine vorgegebene Dauer ein Aktivierungssignal ausgegeben. In einer weiteren Ausführungsform werden die Halte-Einheit 21,22 getriggert, sobald eine jeweilige vorgegebene Schwelle überschritten ist. Tritt beispielhaft ein Defekt im Early-Crash-Sensor auf, so wird direkt nach dem Einschalten des Systems der Ausgang der Halte-Einheit 21 für eine vorgegebene Zeitdauer aktiv. Nach dieser Zeitdauer ist der Ausgang deaktiviert (not ENABLE). Da die zweite Halte-Einheit 22 in dieser Zeitdauer einen deaktivierten Ausgang hat (not enable) wird der zweite Vorstufentransistor T13 nicht durchgeschaltet. Obwohl der erste Vorstufentransistor T12 für eine vorgegebene Zeitdauer aktiviert wurde, in diesem Fall durch ein LOW-Level-Signal, bleibt der erste Sicherheits-Schalter T11 gesperrt.

Der defekte Early-Crash-Satellite S1 ändert bei einem Aufprall seinen Zustand nicht so, dass die erste Halte-Einheit 21 an ihrem Ausgang aktiviert wird. Erkennt nun der Beschleunigungssensor S2 in X-Richtung in Verbindung mit der ersten Auswerteeinheit 25 den Aufprall, wird zwar über die Feuer-Routine in der ersten Aktiviereinheit 26 die beiden Zündschalter T15 und T16 aktiviert. Dagegen bleiben die Vorstufenschalter T12, T13 gesperrt, da die erste Halte-Einheit 21 an ihrem Ausgang nicht aktiv ist. Somit sperrt der erste Sicherheits-Schalter T11, wodurch kein Strom durch den ersten Zündpfad fließen kann und das aktive Element Z1 nicht ausgelöst wird.

Die Vorstufenschalter T12 und T13 schalten nur dann beide durch, wenn die Aktivierungssignale an den Ausgängen der ersten und der zweiten Halte-Einheit 21, 22 in einem vorgegebenen Zeitfenster aktiv sind. Das Zeitfenster beträgt im Ausführungsbeispiels etwa 50 ms.

Ist der Beschleunigungssensor S2 in X-Richtung teilweise defekt, und/oder die Feuer-Entscheidung in der ersten Auswerteeinheit 25 falsch, so werden zwar eventuell über die Feuer-Routine die beiden Zündschalter T15 und T16 aktiviert. Es ist aber unwahrscheinlich, dass die Feuer-Entscheidung der ersten Auswerteeinheit 25 zeitgerecht in dem vorgegebenen Zeitfenster auftritt, um beide Vorstufenschalter T12, T13 durchzuschalten. Das Halteglied 21 wird hier nicht aktiviert, so dass der Transistor T11 nicht geschlossen wird und somit das Zündelement Z1 nicht ausgelöst wird.

Es entsteht eine Ansteuerungsanordnung für Frontal-Crash-Erkennung mit hoher Eigensicherheit.

Im unteren Teil der Figur 1 ist ein zweiter Zündpfad C2, T21, T25, Z2, T26 und eine zweite Vorstufe R2, T22, T23 dargestellt, die in ihrem Aufbau und ihrer Funktion dem ersten Zündpfad und der ersten Vorstufe entsprechen.

Weiterhin ist eine zweite Auswerteeinheit 35 im Steuergerät angeordnet, der die Sensorsignale der Sensoren S3, S4, S5 zugeführt werden. Die zweite Auswerteeinheit 35 beinhaltet einen Algorithmus, der abhängig von den Eingangssignalen der Sensoren eine Feuer-Entscheidung für das aktive Element Z2 trifft. Die Feuer-Entscheidung wird an eine zweite Aktiviereinheit 36 und eine fünfte Halte-Einheit 33 weitergeleitet, die eine Haltezeit von vorzugsweise etwa 1 Sekunde aufweist. Die zweite Aktiviereinheit 36 bereitet die Feuer-Entscheidung auf und leitet entsprechende Signale an den Zündschalter T25, T26 weiter. Die in z- und y-Richtung detektierenden Beschleunigungssensoren S3 und S4 beaufschlagen eine dritte Halte-Einheit 31, die vorzugsweise eine Haltedauer von etwa 1 Sekunde aufweist.

Die Sensorsignale des Beschleunigungssenors S4 wird weiterhin einer vierten, in der Steuereinheit 1 angeordneten Halte-Einheit 32 zugeführt, die vorzugsweise eine Haltedauer von 100 ms aufweist.

Die Kombination der drei Sensoren S3, S4, S5 ermöglichen der zweiten Auswerteeinheit 35, einen Seitenaufprall und ein Roll-Over in Abhängigkeit von den Sensorsignalen zu erkennen und entsprechende, durch das aktive Element Z2 symbolisierte Zündelmente, beispielsweise des Seiten-Airbags, des Roll-Over-Vorhangs oder anderer Rückhaltesysteme zu aktivieren.

Prinzipiell funktioniert das Safing-Konzept wie das Konzept, das für die Erkennung eines Frontal-Aufpralls mit anschließender Aktivierung der Front-Airbags schon erläutert wurde. Dabei arbeiten die drei Sensoren S3, S4, S5 gleichzeitig als Safing-Sensoren. Zur Aktivierung des Zündelements Z2 müssen sowohl die den Haltegliedern 31 bzw. 32 vorgeschalteten Elemente eine ausreichend hohe Beschleunigung erkennen als auch der Algorithmus in der Auswerteeinheit 35 einen Aufprall bzw. Rollover erkennen. Die Ausgangssignale der dritten und der vierten Halte-Einheit 31, 32 werden über ein ODER-Glied 39 miteinander verknüpft. Das Ausgangssignal des ODER-Glieds 39 wird über einen Inverter 37 dem dritten Vorstufenschalter 22 der Vorstufe und einem UND-Glied 38 zugeführt, das als zweiten Ausgang das Feuer-Flag der fünften Halte-Einheit 33 erhält. Das Ausgangssignal des UND-Glieds 38 wird dem vierten Vorstufenschalter T23 zugeführt.

Durch die Ver-UND-ung der beiden Vorstufenschalter T22, T23 entsteht bei einem Roll-Over-Ereignis ein Zeitfenster von etwa 1 Sekunde, das von den beiden Auswerteeinheiten 31 und 33 vorgegeben wird.

Bei einem Seitenaufprall wird nur der Sensor S4 in y-Richtung aktiviert, so dass in diesem Fall das Zeitfenster für das Durchschalten der beiden Vorstufenschalter T22, T23 und das nachfolgende Durchschalten des zweiten Sicherheits-Schalters T21 von den Halte-Einheiten 32 und 33 vorgegeben wird.

Der Beschleunigungssensor S4 in y-Richtung gibt zwei unterschiedliche Signale aus, die einerseits für die Erkennung eines Roll-Over-Zustandes und andererseits für die Erkennung eines Seitenaufpralls dienen. Entsprechend werden die beiden unterschiedlichen Sensorsignale den beiden Halte-Einheiten 31 und 32 zugeführt.

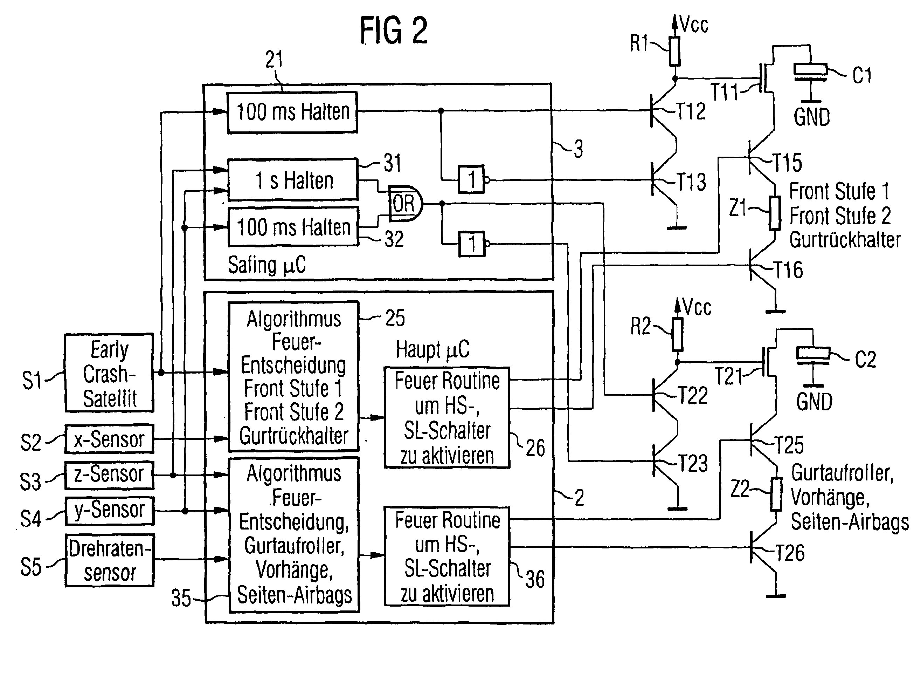

Figur 2 zeigt eine Schaltungsanordnung zum Erkennen von Crash-Situationen und zum Auslösen von Zündelementen, die im Wesentlichen der Schaltungsanordnung aus Figur 1 entspricht.

Im Unterschied zu der Schaltungsanordnung zu Figur 1 ist in Figur 2 die Steuereinheit 1 aus Figur 1 unterteilt in zwei Untereinheiten, die Hauptsteuereinheit 2 und die Sicherheitssteuereinheit 3.

Diese auch hardwaremäßig erfolgte Unterteilung erhöht die Eigensicherheit des Systems. In der Hauptsteuereinheit 2 sind die Auswerteeinheiten 25, 35 und die Aktiviereinheiten 26, 36 enthalten. In der Sicherheitssteuereinheit 3 sind alle Sicherheitsfunktionen enthalten, die zur Ansteuerung der Vorstufen R1, T12, T13 und R2, T22, T23 dienen. Es sind somit in der Sicherheitssteuereinheit 3 die unterschiedlichen Halte-Einheiten 21, 31, 32 und entsprechende Verknüpfungsglieder (ODER-, UND-Glieder und Inverter) enthalten. Es wäre denkbar, auch die Halte-Einheiten 22, 33 aus Figur 1 in der Sicherheitssteuereinheit 3 unterzubringen und entsprechende Verbindungen zwischen der Hauptsteuereinheit 2 und der Sicherheitssteuereinheit 3 vorzusehen. Die Sensorsignale der Beschleunigungs- bzw. Drehratensensoren S1 bis S5 werden jeweils in die entsprechenden Funktionsblöcken der Hauptsteuereinheit 2 und der Sicherheitssteuereinheit 3 zugeführt.

Durch das Unterteilen der Steuereinheit 1 in eine Hauptsteuereinheit 2 und eine Sicherheitssteuereinheit 3 wird eine Struktur geschaffen, durch die ein fehlerhaftes Arbeiten von einer Hardware- bzw. Software-Einheit zu einem Nichtauslösen der entsprechenden aktiven Einheiten Z2, Z1 führt.

In einer weiteren Ausführungsform sind die Widerstände R1 und R2 der beiden Vorstufen nicht mit der Versorgungsspannung Vcc verbunden, wie in den Figuren 1 und 2 dargestellt, sondern jeweils des ersten bzw. zweiten Energiespeichers C1,C2 verbunden, die jeweils ein Zündpotential aufweisen. Dadurch wird sichergestellt, dass der als p-Kanal oder pnp ausgebildete Sicherheitstransistor T11 bzw. T21 unabhängig von der Potentialdifferenz zwischen der Versorgungsspannung Vcc und dem Zündpotential des Energiespeichers C1 bzw. C2 bei entsprechender Ansteuerung durch die entsprechende Vorstufe sicher sperrt.

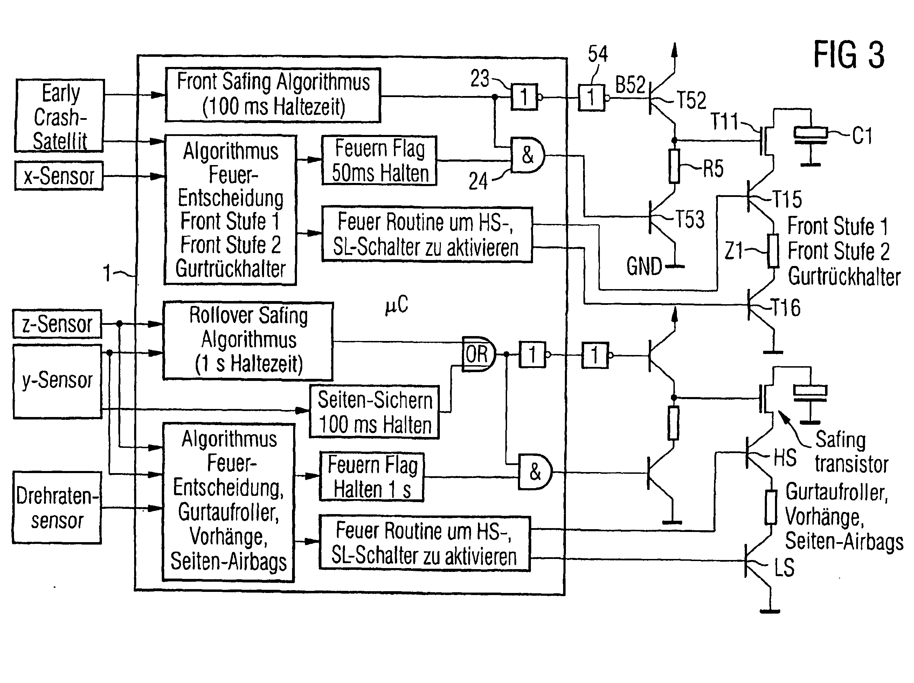

In Figur 3 ist eine Ansteuerschaltung dargestellt, die sich von Figur 1 dadurch unterscheidet, dass die Schaltung im Bereich der Vorstufen R1, T12, T13 und R2, T22, T23 anders ausgeführt sind. Anhand der oberen Vorstufe R1, T12, T13 sind die Änderung beispielhaft dargestellt.

Der Ausgang des Inverters 23 ist über ein Ausgangspin der Steuereinheit 1 an einen weiteren Inverter 54 angeschlossen. Der Ausgang des weiteren Inverters 54 ist an den Steuereingang (Basis/Gate) eines Vorstufenschalter T52 angeschlossen. Der Ausgang des UND-Gliedes 24 ist über ein Ausgangspin der Steuereinheit 1 an den Steuereingang (Basis/Gate) eines weiteren Vorstufenschalters T53 angeschlossen. Der Durchschaltzweig des Vorstufenschalters T52 ist emitterseitig bzw. sourceseitig mit dem Potential des Zündkondensators C1 und kollektorseitig bzw. drainseitig mit dem Steuereingang des Sicherheitstransistors T11 und einem Ende des Widerstand R5 verbunden.

Der Durchschaltzweig des Vorstufenschalters T53 ist emitterseitig bzw. sourceseitig mit der Masse GND und kollektorseitig bzw. drainseitig mit dem anderen Ende des Widerstand R5 verbunden.

Der Sicherheitsschalter T11 schaltet nur dann durch, wenn der Vorstufenschalter T52 hochohmig ist, d.h. sein Durchschaltzweig gesperrt ist, und der Vorstufenschalter T53 durchschaltet. Dafür müssen die Eingänge der Vorstufenschalter T52 und T53 auf HIGH und somit die Ausgangspins des Inverters 23 und des UND-Glieds 24 auf LOW bzw. auf HIGH geschaltet sein. Der Steuereingang des Sicherheitsschalters T11 wird dann gegen Masse gezogen, wodurch der beispielhaft als p-kanal MOSFET-Transistor ausgebildete Sicherheitsschalter T11 durchschaltet.

Alle anderen drei möglichen Zustandskombinationen am Eingang der beiden Vorstufenschalter T52, T53 führen zum Sperren des Sicherheitstransistors T11. So ist bei einem Kurzschluss zwischen den beiden genannten Ausgangspins oder einem gleichphasigen Störeinfluss auf die beiden Ausgangspins der Sicherheitstransistor T11 immer gesperrt.

In einer weiteren Ausführungsform sind die Vorstufen gemäß Figur 2 durch die in der Figur 3 dargestellten Vorstufen Figur 2 ersetzbar.

## Patentansprüche

1. Vorrichtung zum Ansteuern eines aktiven Elements (Z1) eines Insassenrückhaltesystems eines Fahrzeugs mit
- einer Steuereinheit (1),
- einem Early-Crash Sensor (S1) und einem Beschleunigungssensor (S2) mit Erfassung in x-Richtung, deren Signale der Steuereinheit (1) zugeführt werden,
- einem Zündpfad (C1, T15, Z1, T16), der einen Energiespeicher (C1), einen Sicherheitsschalter (T11), ein aktives Element (Z1), und mindestens einen Zündschalter (T15, T16), aufweist, der von der Steuereinheit gesteuert wird,
- eine Vorstufe (R1, T12, T13); die den Sicherheitsschalter (T11), ansteuert und von der Steuereinheit gesteuert wird, wobei die Vorstufe den Sicherheits-Schalter (T11), freischaltet, wenn die Sensoren (S1, S2) eine ausreichende Beschleunigung erkennen, und die Vorstufe den Sicherheits-Schalter (T11), sperrt, wenn ein Sensor und/oder die Steuereinheit (1) defekt ist, wobei ein jeweiliges Steuersignal sowohl des Sicherheitsschalters (T11), als auch mindestens eines Zündschalters (T15, T16), von dem zeitlichen Verlauf der Signale beider Sensoren (S1, S2) abhängig ist,
- wobei die Vorstufe mehrere Vorstufenschalter aufweist, deren Eingänge mit der Steuereinheit (1) verbunden sind und deren Durchschaltzweige in Serie geschaltet sind,
- wobei ein Widerstand mit den Durchschaltzweigen in Serie geschaltet ist, und
- wobei der Sicherheits-Schalter dann durchschaltet, wenn die Vorstufenschalter von der Steuereinheit enabelt werden,
- wobei bei einer gleichsinnig einwirkenden Störung oder einem Kurzschluss zwischen zwei Eingängen der Vorstufenschalter der Sicherheitsschalter (T11) gesperrt wird.

2. Vorrichtung nach einem der vorherigen Ansprüche, **dadurch gekennzeichnet, dass** bei einem Kurzschluss zwischen zwei Eingängen der Vorstufenschalter das dabei entstehende Potential soweit in der Nähe der Masse (GND) bzw. der Versorgungsspannung (Vcc) liegt, dass mindestens einer der Vorstufenschalter (T12,T13) sperrt.

3. Vorrichtung nach einem der vorherigen Ansprüche **dadurch gekennzeichnet, dass**
die Steuereinheit (1) im Wesentlichen als Microcontroller (µC; 1) ausgebildet ist.

4. Vorrichtung nach einem der vorherigen Ansprüche **dadurch gekennzeichnet, dass**
die Vorstufenschalter, der Zündschalter, der Sicherheits-Schalter vorzugsweise als bipolare und/oder als Feldeffekt-Transistoren ausgebildet sind.

5. Vorrichtung nach einem der vorherigen Ansprüche **dadurch gekennzeichnet, dass** die Vorstufe aus diskret aufgebauten Vorstufen-Schaltern besteht.

## Claims

1. Device for driving an active element (Z1) of an occupant restraint system of a vehicle having
- a control unit (1),
- an early crash sensor (S1) and an acceleration sensor (S2) with detection in the x direction, whose signals are fed to the control unit (1),
- an ignition path (C1, T15, Z1, T16), which has an energy store (C1), a safety switch (T11), an active element (Z1) and at least one ignition switch (T15, T16), which is controlled by the control unit,
- a prestage (R1, T12, T13) which drives the safety switch (T11) and is controlled by the control unit, the prestage enabling the safety switch (T11) if the sensors (S1, S2) identify a sufficient acceleration, and the prestage inhibiting the safety switch (T11) if a sensor and/or the control unit (1) is defective, a respective control signal both of the safety switch (T11) and of at least one ignition switch (T15, T16) being dependent on the temporal profile of the signals of the two sensors (S1, S2),
- the prestage having a plurality of prestage switches whose inputs are connected to the control unit (1) and whose through-connection branches are connected in series,
- a resistor being connected in series with the through-connection branches, and
- the safety switch turning on when the prestage switches are enabled by the control unit,
- the safety switch (T11) being inhibited in the event of a disturbance acting in the same sense or a short circuit between two inputs of the prestage switches.

2. Device according to the preceding claim, **characterized in that**, in the event of a short circuit between two inputs of the prestage switches, the resulting potential is in proximity to ground (GND) or the supply voltage (Vcc) to such an extent that at least one of the prestage switches (T12, T13) turns off.

3. Device according to one of the preceding claims, **characterized in that** the control unit (1) is essentially designed as a microcontroller (µC; 1).

4. Device according to one of the preceding claims, **characterized in that** the prestage switches, the ignition switch, the safety switch are preferably designed as bipolar and/or as field-effect transistors.

5. Device according to one of the preceding claims, **characterized in that** the prestage comprises prestage switches of discrete construction.

## Revendications

1. Dispositif permettant de commander un élément actif (Z1) appartenant à un système de retenue des passagers d'un véhicule, avec
- une unité de commande (1),
- un détecteur Early Crash (S1) et un détecteur d'accélération (S2) avec reconnaissance dans la direction x, dont les signaux sont transmis à l'unité de commande,
- un chemin d'allumage (C1, T15, Z1, T16), qui comprend un accumulateur d'énergie (C1), un interrupteur de sécurité (T11), un élément actif (Z1, Z2) et au moins un interrupteur d'allumage (T15, T16), qui est commandé par l'unité de commande,
- un étage préliminaire (R1, T12, T13;), qui commande l'interrupteur de sécurité (T11) et qui est commandé par l'unité de commande, dans lequel l'étage préliminaire libère l'interrupteur de sécurité (T11) lorsque les détecteurs (S1, S2) reconnaissent une accélération suffisante, et l'étage préliminaire bloque l'interrupteur de sécurité (T11) lorsqu'un détecteur et/ou l'unité de commande (1) est défectueux/défectueuse, dans lequel un signal de commande respectif aussi bien de l'interrupteur de sécurité (T11) que d'au moins un interrupteur d'allumage (T15, T16) dépend de l'évolution temporelle des signaux des deux détecteurs (S1).
- dans lequel l'étage préliminaire présente plusieurs interrupteurs d'étage préliminaire, dont les entrées sont raccordées à l'unité de commande (1) et dont les branches de connexion sont montées en série,
- dans lequel une résistance est montée en série avec les branches de connexion, et
- dans lequel le transistor de sécurité se connecte lorsque les interrupteurs d'étage préliminaire sont activés par l'unité de commande,
- dans lequel en cas d'apparition, dans le même sens d'une perturbation ou d'un court-circuit entre deux entrées des interrupteurs d'étage préliminaire, l'interrupteur de sécurité (T11) est bloqué.

2. Dispositif selon l'une quelconque des revendications précédentes,
**caractérisé en ce que**
en cas de court-circuit entre deux entrées des interrupteurs d'étage préliminaire, le potentiel apparaissant à cette occasion est proche de la masse (GND) ou de la tension d'alimentation (Vcc) dans la mesure où au moins un des interrupteurs d'étage préliminaire (T12, T13) est bloqué.

3. Dispositif selon l'une quelconque des revendications précédentes,
**caractérisé en ce que**
l'unité de commande (1) est formée essentiellement par un microcontrôleur (µC; 1).

4. Dispositif selon l'une quelconque des revendications précédentes,
**caractérisé en ce que**
les interrupteurs d'étage préliminaire, l'interrupteur d'allumage, l'interrupteur de sécurité sont de préférence constitués par des transistors bipolaires et/ou des transistors à effet de champ.

5. Dispositif selon l'une quelconque des revendications précédentes,
**caractérisé en ce que**
l'étage préliminaire se compose d'interrupteurs d'étage préliminaire de structure séparée.
